(19) Europäisches Patentamt
European Patent Office
Office européen des brevets

(11) **EP 4 395 193 A1**

(12) **EUROPEAN PATENT APPLICATION**
published in accordance with Art. 153(4) EPC

(43) Date of publication:
**03.07.2024 Bulletin 2024/27**

(21) Application number: **22897636.1**

(22) Date of filing: **14.11.2022**

(51) International Patent Classification (IPC):
**H04B 7/0456** $^{(2017.01)}$    **H04B 7/02** $^{(2018.01)}$

(52) Cooperative Patent Classification (CPC):
**H04B 7/02; H04B 7/0456; H04B 7/06; H04B 7/08**

(86) International application number:
**PCT/CN2022/131635**

(87) International publication number:
**WO 2023/093553 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 CN 202111414643**

(71) Applicant: **ZTE Corporation**
**Shenzhen, Guangdong 518057 (CN)**

(72) Inventors:
• **YANG, Jun**
  **Shenzhen, Guangdong 518057 (CN)**
• **CHEN, Yijian**
  **Shenzhen, Guangdong 518057 (CN)**
• **DOU, Jianwu**
  **Shenzhen, Guangdong 518057 (CN)**

(74) Representative: **Tiburzi, Andrea et al**
**Barzanò & Zanardo Roma S.p.A.**
**Via Piemonte 26**
**00187 Roma (IT)**

(54) **BEAM REGULATION AND CONTROL METHOD, ELECTRONIC DEVICE, AND STORAGE MEDIUM**

(57)    Provided are a beam control method, an electronic device, and a storage medium. The method includes the following: Channel measurement information is sent to a second communication node. An optimal precoding matrix indicator, PMI, fed back by the second communication node according to the channel measurement information is received. A corresponding precoding is selected from a codebook according to the PMI to perform beam control. The codebook includes the precoding and a phase offset. Embodiments of the present application use the codebook including the phase offset to accurately control beams, which can improve a signal reception gain and enhance signal quality between communication nodes.

FIG. 2

**Description**

TECHNICAL FIELD

The present application relates to the field of wireless communication technology, for example, a beam control method, an electronic device, and a storage medium.

BACKGROUND

Array antennas, due to their good directional gain, have been widely used in wireless communications, for example, massive multiple input multiple output (Massive MIMO) antennas used in 5G networks. An array antenna typically relies on a phase shifter to change the initial phase of a transmitted signal on each antenna element to achieve the function of beam control, that is, a phased array antenna. The phased array antenna changes the initial phase of the transmitted signal on each antenna element to implement changes in beam direction, without mechanical rotation. For technical and cost reasons, a phase shifter typically employed by the array antenna can only achieve discrete phase manipulation, and the phase shifter can perform only a limited number of phase state changes on wireless signals emitted by the antenna elements. For example, a 1-bit phase shifter can change the phase of a transmitted signal by 0 or $\pi$, and a 2-bit phase shifter can change the phase of a transmitted signal by 0, $\pi/4$, $\pi/2$, or $3\pi/4$. Due to limitations in positioning accuracy, feedback delay, and computational efficiency of a receiving end, the array antenna typically needs to prepare a set of codebooks in advance. The codebooks contain a series of precoding matrices. Each precoding matrix corresponds to a beam direction. The precoding matrix corresponds to the amount of a phase change on each element in the phased array antenna. The direction of a beam can be changed by switching to a different precoding matrix in the codebook.

A reconfigurable intelligent surface is a two-dimensional planar array composed of a large number of passive sub-wavelength artificial electromagnetic units. These electromagnetic units are periodically arranged according to a certain rule, and the thickness of the electromagnetic units may be negligible. Each electromagnetic unit is composed of a specific shape of metal or dielectric material and is connected to an electronic component. The electronic component is controlled by an intelligent controller on the panel so that the adjustment of an electromagnetic property of the electromagnetic unit can be implemented, such as the adjustment of the average magnetic permeability and the average dielectric constant. By the control of the electromagnetic property of an electromagnetic unit, an electromagnetic signal incident on the surface of the electromagnetic unit can be reflected or transmitted with a different amplitude, phase, polarization directions, etc. Thus, a virtual direct link can be constructed between a base station and a user terminal, thereby achieving the purpose of intelligent control of the spatial electromagnetic environment. With the potential to control the spatial electromagnetic environment and the advantages of low profile and low cost, the reconfigurable intelligent surface is expected to become a key technology for future 6G wireless communication. The currently verified manner for changing the beam direction of a reconfigurable intelligent surface mainly includes phase manipulation. For the reconfigurable intelligent surface with dynamic phase manipulation capability, the beam control mode may be the same as that of the base station, that is, the codebook is preset first, and then an appropriate precoding is selected from a codebook according to the terminal feedback information.

In the existing precoding scheme, the precoding matrix preset in the codebook on the base station side is fixed. Regardless of the distance of the terminal, the base station selects the most matched precoding matrix from the codebook according to feedback information and uses the precoding matrix for beam control. However, theoretical and simulation analysis shows that when the precoding adopts quantized phase manipulation, the selection of the fixed precoding can only ensure the optimal beam direction but cannot ensure the optimal receiving gain. Therefore, it is necessary to optimize the beam control mode based on the precoding in the related art so that both the beam direction and the beam gain are optimal by adjusting the precoding matrix in the codebook.

SUMMARY

The main purpose of embodiments of the present application is to provide a beam control method, an electronic device, and a storage medium.

Embodiments of the present application provide a beam control method. The method is applied to a first communication node and includes the following.

Channel measurement information is sent to a second communication node.

An optimal precoding matrix indicator (PMI) fed back by the second communication node according to the channel measurement information is received.

A corresponding precoding is selected from a codebook according to the optimal PMI to perform beam control, where the codebook includes the precoding and a phase offset.

Embodiments of the present application also provide a beam control method. The method is applied to a second communication node and includes the operations below.

Channel measurement information sent by a first communication node is received.

An optimal PMI is determined according to the channel measurement information.

The optimal PMI is fed back to the first communication node so that the first communication node selects a corresponding precoding from a codebook for performing beam control. The codebook includes the precoding and a phase offset.

Embodiments of the present application also provide an electronic device. The electronic device includes one or more processors and a memory.

The memory is configured to store one or more programs.

The one or more programs, when executed by the one or more processors, cause the one or more processors to perform the beam control method according to any embodiment of the present application.

Embodiments of the present application also provide a computer-readable storage medium. The computer-readable storage medium stores one or more programs which, when executed by one or more processors, perform the beam control method according to any embodiment of the present application.

BRIEF DESCRIPTION OF DRAWINGS

FIG. 1 is an example diagram illustrating beamforming effects of an array antenna according to an embodiment of the present application.

FIG. 2 is a flowchart of a beam control method according to an embodiment of the present application.

FIG. 3 is a flowchart of another beam control method according to an embodiment of the present application.

FIG. 4 is a flowchart of another beam control method according to an embodiment of the present application.

FIG. 5 is a flowchart of a beam control method according to an embodiment of the present application.

FIG. 6 is a flowchart of another beam control method according to an embodiment of the present application.

FIG. 7 is a diagram illustrating the structure of a beam control apparatus according to an embodiment of the present application.

FIG. 8 is a diagram illustrating the structure of another beam control apparatus according to an embodiment of the present application.

FIG. 9 is a diagram illustrating the structure of an electronic device according to an embodiment of the present application.

DETAILED DESCRIPTION

It is to be understood that the embodiments described herein are intended to explain the present application and not to limit the present application.

Suffixes such as "module", "component", or "unit" used for indicating elements in the subsequent description are used merely for facilitating the description of the present application and have no particular meaning in themselves. Therefore, "module", "component", or "unit" may be used in a mixed manner.

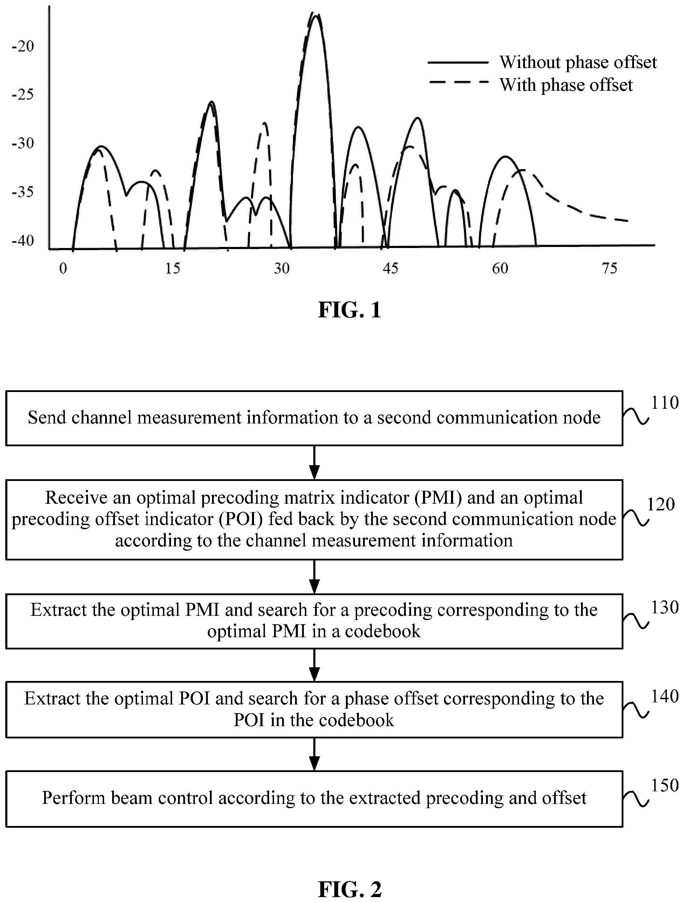

In the existing precoding scheme, a codebook on the base station side uses a preset fixed precoding matrix. Regardless of the distance between a terminal and the base station, the base station selects the most matched precoding matrix from a beam control codebook according to feedback information. However, theoretical and simulation experiments show that when the precoding adopts quantized phase manipulation, only the optimal beam direction can be ensured by using the fixed precoding for beam control, but the optimal receiving gain cannot be ensured. With reference to FIG. 1, beamforming effects of two schemes using a 32*32 array antenna at a horizontal position of 30 degrees are shown. The first type of scheme is a conventional fixed precoding scheme. The second type of scheme is a scheme in which an optimal global phase offset is superimposed on the conventional precoding scheme. Through the analysis of FIG. 1, it can be seen that the precoding superimposed with the optimal phase offset has a higher peak gain and lower sidelobes. With reference to Table 1, the phase offset may improve the beam gain differently under different array sizes. In summary, the optimal phase offset may be used for optimizing the precoding-based beam control mode.

Table 1 Improvement of Beam Gain by Phase Offset Correction under Different Array Sizes

| Array | Optimal offset (°) | Original gain (dB) | Optimized gain (dB) | Gap (dB) |
|---|---|---|---|---|
| 2*2 | -107.66 | -63.0094 | -61.6651 | 1.3443 |
| 4*4 | -107.66 | -51.0719 | -49.7275 | 1.3443 |
| 8*8 | -107.66 | -39.4503 | -38.106 | 1.3444 |
| 16*16 | -160.66 | -27.1214 | -26.7813 | 0.3401 |
| 32*32 | -114.82 | -15.3014 | -14.8798 | 0.4216 |
| 64*64 | -47.97 | -3.3513 | -3.1306 | 0.2207 |
| 128*128 | -44.62 | 3.6823 | 4.1557 | 0.4734 |

FIG. 2 is a flowchart of a beam control method according to an embodiment of the present application. This embodiment of the present application may be applied to the case of beam control of an array antenna. The method may be executed by an electronic device provided by this embodiment of the present application. The electronic device may be implemented by software and/or hardware. The electronic device may be a first communication node in a wireless communication network. The first communication node may transmit signals on a base station side and may include a base station or a reconfigurable intelligent surface. In this embodiment of the present application, two codebooks may be used for storing the precoding and the phase offset respectively. With reference to FIG. 2, the method provided by this embodiment of the present application includes the operations below.

In S 110, channel measurement information is sent to a second communication node.

The channel measurement information may be information about measuring a channel state between the first communication node and the second communication node and may include a signal quality measurement indicator and a receiving gain measurement indicator. The second communication node may be an apparatus for receiving a signal from the first communication node and may include a mobile device, an Internet of Things device, and a reconfigurable intelligent surface.

In this embodiment of the present application, the first communication node may send the channel measurement information to the second communication node to acquire a channel state between the first communication node and the second communication node.

In S 120, an optimal precoding matrix indicator (PMI) and an optimal precoding offset indicator (POI) fed back by the second communication node according to the channel measurement information are received.

The second communication node may determine the optimal PMI and the optimal POI according to the information measurement information. The second communication node may feed back the determined optimal PMI and the optimal POI together to the first communication node. The first communication node may receive the optimal PMI and the optimal POI simultaneously.

In S 130, the optimal PMI is extracted, and a precoding corresponding to the optimal PMI is searched in a codebook.

The optimal PMI may be extracted, and the optimal PMI may be index information or indication information of the precoding in the codebook. The corresponding precoding may be searched in the codebook according to the optimal PMI. The precoding may be a precoding vector or a precoding matrix, which is capable of adjusting one beam direction or one beam direction group.

In S 140, the optimal POI is extracted, and a phase offset corresponding to the POI is searched in the codebook.

A phase offset data set stored in the codebook includes K constants, and each constant has a value ranging from $-\pi$ to $\pi$. The optimal phase offset for beam control may be determined according to the POI information fed back by the second communication node.

In S 150, beam control is performed according to the extracted precoding and offset.

The beam control may be performed by using the precoding according to different feedback results. When the optimal offset s extracted according to the POI information is equal to 0, only the extracted precoding may be used for control; and when the optimal offset s extracted is not equal to 0, the phase offset may be used for adjusting the precoding according to a preset formula. The preset formula includes the following:

$$\mathbf{\Phi}' = e^{js}\mathbf{\Phi}.$$

Φ' denotes the adjusted precoding, Φ denotes the precoding, and j is an imaginary unit.

Further, based on the preceding embodiment of the present invention, the method may also include determining a feedback result of the optimal POI of the second communication node and using the precoding to perform the beam control according to the feedback result.

In this embodiment of the present application, the first communication node may also identify the received optimal POI and determine, for example, whether the optimal POI is received and/or whether the received optimal POI indicates an offset for the precoding. Different beam control may be performed under different feedback results. For example, when the optimal POI is not received, only the precoding corresponding to the optimal PMI in the codebook may be used for beam control. For another example, when the optimal POI is received, but the value of the optimal POI is zero, the feedback result indicates that in beam control, no offset adjustment is made to the precoding corresponding to the optimal precoding matrix indicator in the codebook, that is, the phase offset is zero. For another example, when the optimal POI is received, and the value of the optimal POI is not zero, the PMI may be used for selecting the precoding in the codebook, the phase offset adjustment is made to the selected precoding based on the phase offset corresponding to the POI, and the beam control is performed using the adjusted precoding.

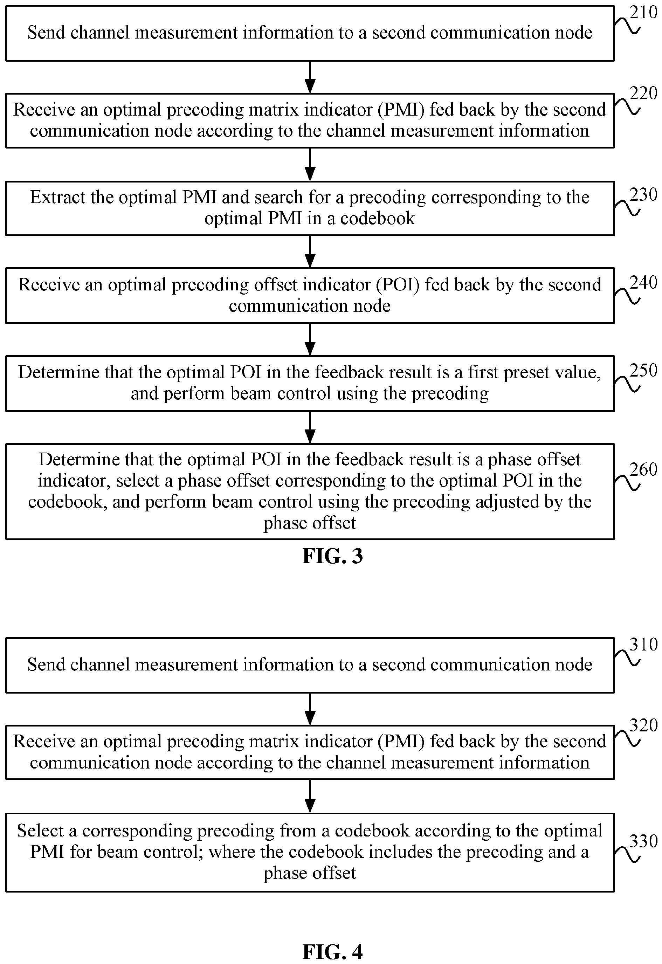

FIG. 3 is a flowchart of another beam control method according to an embodiment of the present application. This embodiment of the present application is a concrete implementation based on the preceding embodiments. With reference to FIG. 3, the first communication node in this embodiment of the present application may separately acquire the optimal PMI and optimal POI of the second communication node. The method provided by this embodiment of the present application includes the operations below.

In S210, channel measurement information is sent to a second communication node.

In S220, an optimal PMI fed back by the second communication node according to the channel measurement information is received.

In S230, the optimal PMI is extracted, and the precoding corresponding to the optimal PMI is searched in a codebook.

The optimal PMI may be extracted, and the optimal PMI may be index information or indication information of the precoding in the codebook. The corresponding precoding may be searched in the codebook according to the optimal PMI. The precoding may be a precoding vector or a precoding matrix, which is capable of adjusting one beam direction or one beam direction group.

In S240, an optimal POI fed back by the second communication node is received.

The optimal precoding offset information may be the optimal offset information determined by the second communication node. The optimal offset information may be used to be superimposed on the precoding corresponding to the PMI to further improve the gain of a controlled beam. Further, it can be understood that to save feedback resources between the first communication node and the second communication node, S220 and S240 may be performed simultaneously, that is, the second communication node may feed back the POI and PMI to the first communication node simultaneously, and the first communication node may simultaneously receive the POI and PMI fed back by the second communication node.

In this embodiment of the present application, the first communication node may also receive an optimal POI fed back by the second communication node.

In S250, it is determined that the optimal POI in the feedback result is a first preset value, and beam control is performed using the precoding.

The first preset value may be pre-agreed. When the value of the POI is the first preset value, the first communication node does not use the POI to adjust the precoding. The first preset value may be zero or a maximum value determined by a storage structure of the POI.

In this embodiment of the present application, after the POI is received, the POI may be extracted and identified; when it is determined that the value of the POI is the first preset value, the first communication node may control the beam only using the precoding selected in the codebook by the PMI.

In S260, it is determined that the optimal POI in the feedback result is a phase offset indicator, the phase offset corresponding to the optimal POI is selected in the codebook, and beam control is performed using the precoding adjusted by the phase offset.

The phase offset indicator may indicate a value of the offset, for example, the phase offset indicator may be an offset or an offset number. The phase offset indicator may be different from the first preset value.

The value of the POI may be determined. When it is determined that the POI is a phase offset, the phase offset corresponding to the POI may be selected from the codebook, and beam control may be performed according to the offset and the precoding corresponding to the PMI. It can be understood that the offset may be used for performing a phase adjustment on the precoding corresponding to the PMI, and the value of the adjustment corresponds to the offset. Beam control may be implemented according to the phase-adjusted precoding.

In this embodiment of the present application, channel measurement information is sent to a second communication node; the optimal PMI fed back by the second communication node according to the channel measurement information is received; the optimal PMI is extracted, and the precoding corresponding to the optimal PMI is searched in the codebook; the optimal POI fed back by the second communication node according to the channel measurement information is received; and the feedback result of the optimal POI is determined. Thus, the precoding is used for adjusting the beam according to different feedback results, which implements accurate beam control, improves the signal reception gain, and enhances the signal quality between communication nodes.

Further, based on the preceding embodiments of the present application, the method further includes adjusting the precoding using the phase offset according to a preset formula. The preset formula includes the following:

$$\mathbf{\Phi}' = e^{js}\mathbf{\Phi}.$$

$\mathbf{\Phi}'$ denotes the adjusted precoding, $\Phi$ denotes the precoding, s denotes the phase offset, and j is an imaginary unit.

Before the beam control using the precoding, the precoding may be adjusted by using the preset formula and the phase offset corresponding to the optimal phase offset. The adjustment manner may be adjusting the phase according to the phase offset based on the original precoding. For example, a multiplication of the precoding and $e^{js}$ is used as the new precoding.

Further, based on the preceding embodiments of the present application, the codebook includes a precoding data set and a phase offset data set. The precoding data set stores the precoding. The phase offset data set stores the phase offset.

The precoding data set may be a data set including one or more precodings. Each precoding may correspond to an initial phase of an element in an array antenna of the first communication node. The phase offset data set may include one or more phase offsets. Each phase offset may be used for adjusting the phase of each precoding. In this embodiment of the present application, the data of the codebook may be divided into two categories and may include the precoding data set and the phase offset data set.

Further, based on the preceding embodiments of the present application, the precoding data set includes N precoding vectors or N precoding matrices, each precoding vector or each precoding matrix corresponds to a spatial beam, or each precoding matrix corresponds to a spatial beam group. N is a positive integer.

In this embodiment of the present application, the precoding data set in the codebook may be composed of precoding vectors or precoding matrices; each precoding vector may correspond to a spatial beam and may be used for controlling the spatial beam; each precoding matrix may correspond to a spatial beam group, and each precoding matrix may control the spatial beam group, The spatial beam group may be composed of beams in multiple directions.

Further, based on the preceding embodiments of the present application, the precoding data set includes N precoding vectors or N precoding matrices, the number of elements in a precoding vector is the same as the number of antenna elements used by the array antenna of the first communication node in the process of beam control, and a precoding matrix includes at least two precoding vectors. N is a positive integer.

The precoding data set of the codebook may be composed of at least one precoding vector or precoding matrix. Each precoding vector may include multiple elements. The number of elements may be the same as the number of antenna elements in the array antenna used in the process of beam control. Each element may represent a phase adjustment amount of one used antenna element. For a corresponding precoding matrix used for controlling a spatial beam group, each precoding matrix may include multiple precoding vectors. If the precoding matrix controls two beams, the number of elements may be twice the number of antenna elements used.

Further, based on the preceding embodiments of the present application, the precoding vector $\Phi$ is equal to $[e^{j\theta_1}, e^{j\theta_2} ... e^{j\theta_i} ... e^{j\theta_n}]$. j denotes an imaginary unit. i denotes an element sequence number. The argument $\theta_i$ of an $i^{th}$ element $e^{j\theta_i}$ denotes an amount of a phase change on an $i^{th}$ element in the array antenna of the first communication node, n denotes the number of antenna elements used in the process of beam control, and the precoding matrix is composed of R precoding vectors. R is greater than or equal to 2.

In this embodiment of the present application, the precoding vector $\Phi$ may be expressed as follows: $\Phi = [e^{j\theta_1}, e^{j\theta_2} ... e^{j\theta_i} ... e^{j\theta_n}]$. j may denote an imaginary unit. i may denote an element sequence number. $\theta_i$ may denote the amount of a phase change on an $i^{th}$ element. n may denote the number of antenna elements used in the process of beam control. The precoding matrix may be composed of R precoding vectors. R may be an integer greater than or equal to 2. The precoding matrix may be expressed as follows:

$$\mathbf{\Phi} = \begin{bmatrix} \mathbf{\Phi}_1 \\ \vdots \\ \mathbf{\Phi}_R \end{bmatrix} = \begin{bmatrix} e^{j\theta_{11}} & \cdots & e^{j\theta_{1N}} \\ \vdots & \ddots & \vdots \\ e^{j\theta_{R1}} & \cdots & e^{j\theta_{RN}} \end{bmatrix}.$$

Further, based on the preceding embodiments of the present application, the phase offset data set includes K constants, and each constant has a value ranging from $-\pi$ to $\pi$.

In this embodiment of the present application, the phase offset data set in the codebook may be composed of multiple constants, and the value range of each constant may be from $-\pi$ to $\pi$.

FIG. 4 is a flowchart of another beam control method according to an embodiment of the present application. This embodiment of the present application may be applied to the case of beam control of an array antenna. The method may be executed by an electronic device provided by this embodiment of the present application. The electronic device may be implemented by software and/or hardware. The electronic device may be a first communication node in a wireless communication network. The first communication node may transmit signals on a base station side and may include a base station or a reconfigurable intelligent surface. In this embodiment of the present application, beam control may be performed with a codebook including the precoding and phase offset. With reference to FIG. 4, the method provided by this embodiment of the present application includes the operations below.

In S310, channel measurement information is sent to a second communication node.

The channel measurement information may be information about measuring a channel state between the first communication node and the second communication node and may include a signal quality measurement indicator and a receiving gain measurement indicator. The second communication node may be an apparatus for receiving a signal from the first communication node and may include a mobile device, an Internet of Things device, and a reconfigurable intelligent surface.

In this embodiment of the present application, the first communication node may send the channel measurement information to the second communication node to acquire a channel state between the first communication node and the second communication node.

In S320, an optimal PMI fed back by the second communication node according to the channel measurement information is received.

The precoding corresponding to the optimal precoding indicator may enable a signal transmitted by the first communication node to have the strongest gain at a location of the second communication node. The PMI may be a serial number or an identification number of the precoding. The optimal PMI may be measured and determined by the second communication node according to the channel measurement information.

The first communication node may receive the optimal PMI fed back by the second communication node. The optimal PMI may be measured and determined by the second communication node using the received channel measurement information.

In S330, a corresponding precoding is selected from the beam control codebook according to the optimal PMI. The codebook includes the precoding and the phase offset.

The codebook may include multiple precodings. Each precoding may correspond to one beam adjustment direction or one beam adjustment direction group of the first communication node. The codebook may include the precoding and the phase offset. The precoding may be a precoding vector or a precoding matrix used for controlling the beam direction. The phase offset may be the amount of a phase change used for being superimposed on the precoding. The precoding vector or precoding matrix may be fine-tuned based on the precoding. It can be understood that the phase offset may be stored in the codebook in an explicit or implicit manner. For example, the codebook stores the precoding and the phase offset; alternatively, the codebook stores the basic precoding and precoding after phase offset adjustment. The codebook implicitly includes the phase offset in a manner of a phase difference between the precoding and the basic precoding.

In this embodiment of the present application, the first communication node may acquire the precoding in the codebook according to the received optimal PMI. It can be understood that the codebook in which the precoding is selected may include the precoding and the phase offset. When only receiving the optimal PMI, the first communication node may only use the precoding for beam control. The optimal PMI may indicate the precoding after the phase offset adjustment or indicate the precoding in the codebook and the phase offset of the precoding.

In this embodiment of the present application, the channel measurement information is sent to the second communication node; the optimal PMI fed back by the second communication node according to the channel measurement information is acquired; and the preceding is selected from the codebook including the precoding and the phase offset according to the PMI so that the beam control is performed. Thus, the receiving gain can be improved and the signal quality between communication nodes is enhanced.

Further, based on the preceding embodiments of the present application, the codebook includes an offset precoding data set generated according to the precoding and the phase offset.

The codebook may only include an offset precoding data set. Each datum in the offset precoding data set may be generated by a precoding and a phase offset. The phase offset may be superimposed on the basis of the precoding.

Further, based on the preceding embodiments of the present application, the offset precoding data set includes M precoding vectors or M precoding matrices, and at least two precodings $\Phi_1$ and $\Phi_2$ in the M precoding vectors or in the M precoding matrices satisfy that $\Phi_2 = e^{js}\Phi_1$. s $\in [-\pi, \pi]$, j denotes an imaginary unit, M is greater than N, and N is the number of independent precodings. "Independent" means that two precoding vectors or two precoding matrices do

not satisfy that $\Phi_2 = e^{js}\Phi_1$.

The offset precoding data set may be composed of multiple precoding vectors or precoding matrices. Each precoding vector may correspond to a spatial beam. Each precoding matrix may correspond to a spatial beam group.

In this embodiment of the present application, a correspondence between the precoding vectors or the precoding matrices in the offset precoding data set exists. It can be understood that a precoding vector or a precoding matrix in the offset precoding data set may be acquired in a manner of superimposing a phase offset on another precoding vector or another precoding matrix included in the offset precoding data set. For example, at least two precodings $\Phi_1$ and $\Phi_2$ may satisfy that $\Phi_2 = e^{js}\Phi_1$, that is, $\Phi_2$ may be generated after $\Phi_1$ is offset using the phase offset s. The value of the phase offset s may be a constant, ranging from $-\pi$ to $\pi$. It can be understood that when the codebook only includes the offset precoding data set, the phase offset may be determined by the positional relationship between two included precodings. The phase offset between the two precodings may be deduced using the formula $\Phi_2 = e^{js}\Phi_1$.

Further, based on the preceding embodiments of the present application, the method also includes determining the value of the phase offset in the codebook according to a terminal distance and an antenna array size of the first communication node.

In this embodiment of the present application, the phase offset in the codebook may be determined according to the number of elements included in the antenna array of the first communication node or determined by the terminal distance, that is, the distance between the second communication node and the first communication node. It can be understood that when the antenna array is too large, for example, when the number of elements or the number of electromagnetic elements exceeds $10^4$, the truncation effect of discrete phase manipulation is relatively small, and the modification of the original precoding using the phase offset does not significantly improve the beam gain. In this case, the value range of the phase offset may be set to an empty set so that the first communication node changes the precoding based on the phase offset. When the terminal distance is too far, for example, when the distance between the first communication node and the second communication node is greater than 100 meters, the modification of the original precoding using the phase offset does not significantly improve the beam gain. In this case, the value range of the phase offset s may also be set to an empty set. Further, when the offset determined based on the antenna size and terminal distance can bring a significant gain to the beam, the density of the phase offset value range may be configured according to real-time requirements of the traffic and limitations of feedback information. When the real-time requirements and the limitations of feedback information are not strict, a denser spacing may be used, for example, 1 degree; while a larger spacing may be used, for example, 5 degrees or 10 degrees, when the requirements are higher.

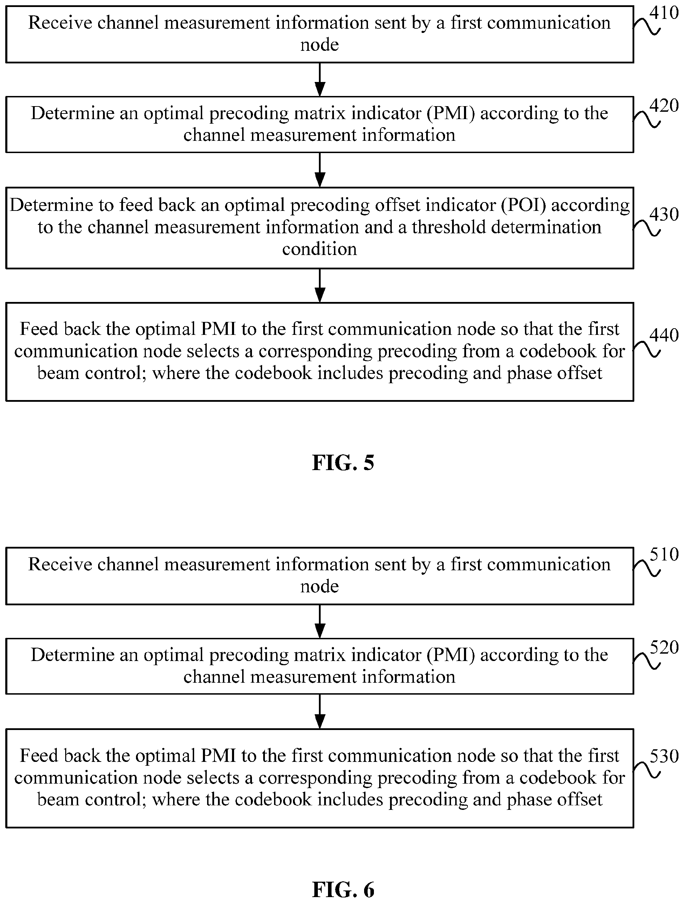

FIG. 5 is a flowchart of a beam control method according to an embodiment of the present application. This embodiment of the present application may be applied to the case of beam control of an array antenna. The method may be executed by an electronic device provided by this embodiment of the present application. The electronic device may be implemented by software and/or hardware. The electronic device may be a second communication node in a wireless communication network. The second communication node may receive signals on a terminal side and may include a mobile terminal device, an Internet of Things device, or a reconfigurable intelligent surface. With reference to FIG. 5, the method provided by this embodiment of the present application includes the operations below.

In S410, channel measurement information sent by a first communication node is received.

In S420, an optimal precoding matrix indicator (PMI) is determined according to the channel measurement information.

In S430, it is determined to feed back an optimal precoding offset indicator (POI) according to the channel measurement information and a threshold determination condition.

The threshold determination condition may be critical information reflecting whether the optimal precoding offset information is fed back. The threshold determination condition may include an antenna array size, a terminal distance, and the like. The channel measurement information may carry the antenna array size and terminal distance of the first communication node. Alternatively, the channel measurement information may indicate a result of the threshold determination condition.

In this embodiment of the present application, the second communication node may determine, according to the channel measurement information sent by the first communication node, whether the channel state between the second communication node and the first communication node satisfies the threshold determination condition, and the second communication node may determine whether to feed back the optimal precoding offset information to the first communication node according to a result of whether the threshold determination condition is satisfied.

For example, the array size or the terminal distance in the channel measurement information may be extracted. When the extracted array size and terminal distance satisfy the threshold determination condition, the second communication node may feed back the optimal POI to the first communication node. Otherwise, the optimal POI fed back by the second communication node to the first communication node is null. For another example, a threshold determination result in the channel measurement information may be extracted. The threshold determination result may directly indicate whether the channel state between the second communication node and the first communication node satisfies the threshold determination condition. When the threshold determination condition is satisfied, the second communication node may feed back the optimal POI to the first communication node. Otherwise, the optimal POI fed back by the second communication node to the first communication node indicates that the POI corresponds to an offset of zero.

In S440, the optimal PMI and the optimal POI are fed back to the first communication node so that the first communication node selects a corresponding precoding and phase offset from a beam control codebook. The codebook includes the precoding and the phase offset.

In this embodiment of the present application, the second communication node may feed back the determined optimal PMI and the optimal POI to the first communication node so that the first communication node can select the corresponding precoding and phase offset from the codebook to adjust the beam.

Further, based on the preceding embodiments of the present application, the codebook includes a precoding data set and a phase offset data set. The precoding data set stores the precoding. The phase offset data set stores the phase offset.

Further, based on the preceding embodiments of the present application, the precoding data set includes N precoding vectors or N precoding matrices, each precoding vector or each precoding matrix corresponds to a spatial beam state, or each precoding matrix corresponds to a spatial beam group. N is a positive integer.

Further, based on the preceding embodiments of the present application, the precoding data set includes N precoding vectors or N precoding matrices, the number of elements in a precoding vector is the same as the number of antenna elements used by the array antenna of the first communication node in the process of beam control, and a precoding matrix includes at least two precoding vectors. N is a positive integer.

Further, based on the preceding embodiments of the present application, a precoding vector $\Phi$ denotes $[e^{j\theta_1}, e^{j\theta_2} \ldots e^{j\theta_i} \ldots e^{j\theta_n}]$. j denotes an imaginary unit. i denotes an element sequence number. $\theta_i$ denotes the amount of a phase change on an $i^{th}$ element, n denotes the number of antenna elements used in the process of beam control. The precoding matrix is composed of R precoding vectors. R is greater than or equal to 2.

Further, based on the preceding embodiments of the present application, a precoding matrix may include R precoding vectors. R may be an integer greater than or equal to 2. The precoding matrix may be represented as follows:

$$\Phi = \begin{bmatrix} \Phi_1 \\ \vdots \\ \Phi_R \end{bmatrix} = \begin{bmatrix} e^{j\theta_{11}} & \cdots & e^{j\theta_{1N}} \\ \vdots & \ddots & \vdots \\ e^{j\theta_{R1}} & \cdots & e^{j\theta_{RN}} \end{bmatrix}.$$

The argument $\theta_i$ of an $i^{th}$ element $e^{j\theta_i}$ denotes the amount of a phase change on an $i^{th}$ element in the array antenna of the first communication node. n denotes the number of antenna elements used in the process of beam control.

Further, based on the preceding embodiments of the present application, the phase offset data set includes K constants, and each constant has a value ranging from $-\pi$ to $\pi$.

FIG. 6 is a flowchart of another beam control method according to an embodiment of the present application. In this embodiment of the present application, only the optimal PMI may be fed back to the first communication node. With reference to FIG. 6, the method provided by this embodiment of the present application includes the operations below.

In S510, channel measurement information sent by a first communication node is received.

In this embodiment of the present application, the second communication node may receive the channel measurement information sent by the first communication node. The channel measurement information may be used for measuring the channel quality between the first communication node and the second communication node to determine the precoding for improving received signal performance.

In S520, an optimal PMI is determined according to the channel measurement information.

The channel state may be detected according to the received channel measurement information, and the precoding with which the receiving gain is improved most obviously may be selected as the optimal PMI according to the detected channel state.

In S530, the optimal PMI is fed back to the first communication node so that the first communication node selects a corresponding precoding from a beam control codebook. The codebook includes the precoding and the phase offset.

In this embodiment of the present application, the second communication node may feed back the determined optimal PMI to the first communication node. The optimal PMI fed back to the first communication node may be index information or identification information. The first communication node may select the corresponding precoding in the codebook according to the PMI for controlling the beam direction. The codebook in the first communication node may include the precoding and the phase offset. It can be understood that the precoding selected in the codebook by the first communication node according to the optimal PMI may be an original precoding or a precoding after the superposition of the phase offset.

In this embodiment of the present application, the channel measurement information sent by the first communication node is received; the optimal PMI is determined according to the channel measurement information; the optimal PMI is fed back to the first communication node so that the first communication node selects the precoding in the codebook including the offset and the precoding according to the optimal PMI and performs the beam control. Thus, accurate beam control is implemented, the signal reception gain is improved, and the signal quality between communication nodes is enhanced.

Further, based on the preceding embodiments of the present application, the codebook includes an offset precoding data set generated according to the precoding and the phase offset.

Further, based on the preceding embodiments of the present application, the offset precoding data set includes M precoding vectors or M precoding matrices. M is greater than N; and at least two precodings $\Phi_1$ and $\Phi_2$ in the M precoding vectors or in the M precoding matrices satisfy that $\Phi_2 = e^{js}\Phi_1$. $s \in [-\pi, \pi]$, and j denotes an imaginary unit.

In an exemplary implementation, a beam control codebook may be composed of two data sets. The first data set may be a precoding codebook C, and C includes N precoding vectors (or matrices) $\Phi$ corresponding to N beam states. A precoding vector may be expressed in the following form: $\Phi = [e^{j\theta_1}, e^{j\theta_2} ... e^{j\theta_i} ... e^{j\theta_N}]$. $\Phi$ denotes the precoding, s denotes the phase offset, and j is an imaginary unit. If the precoding codebook C includes the N precoding matrices, the precoding matrix may be expressed as follows:

$$\Phi = \begin{bmatrix} \Phi_1 \\ \vdots \\ \Phi_R \end{bmatrix} = \begin{bmatrix} e^{j\theta_{11}} & \cdots & e^{j\theta_{1N}} \\ \vdots & \ddots & \vdots \\ e^{j\theta_{R1}} & \cdots & e^{j\theta_{RN}} \end{bmatrix}.$$

R denotes the number of precoding vectors, and R is an integer greater than or equal to 2. For the codebook C in the form of precoding vectors, if the codebook C is used for controlling the transmitting beam on the base station side, elements in the precoding vector are in a one-to-one correspondence with antenna elements used in a process of array antenna beam control. The number of elements of a precoding matrix may be equal to the number of antenna elements used in the process of array antenna beam control. The argument $\theta_i$ of an $i^{th}$ element $e^{j\theta_i}$ denotes the amount of a phase change to be performed by a phase shifter on an $i^{th}$ element in the antenna. The phase shifter on the antenna element adjusts the state of the antenna element according to this change amount so that the initial phase of the transmitted signal changes by $\theta_i$. In the case of transmissive or reflective beam control applied to a reconfigurable intelligent surface, the number of elements in a precoding vector may be equal to the total number of electromagnetic units on the reconfigurable intelligent surface. The elements in the precoding vector are in a one-to-one correspondence with electromagnetic units on the reconfigurable intelligent surface. The argument $\theta_k$ of a $k^{th}$ element $e^{j\theta_k}$ denotes a to-be-adjusted amount of a phase change on a $k^{th}$ electromagnetic unit of the reconfigurable intelligent surface. The electromagnetic unit adjusts its state (such as a change in input voltage and a change in current) according to this change amount so that the phase of the signal incident on the surface of the electromagnetic unit changes by $\theta_k$ after reflection or transmission. For the precoding matrix, in the process of beam control, the phase manipulation of an $i^{th}$ antenna element or an $i^{th}$ electromagnetic element needs to be determined by an $i^{th}$ column of elements in $\Phi$ according to the following formula: $\phi_i = \Phi_{1i} + \sum_{j=2}^{R} e^{\Delta\theta_j}\Phi_{ji}$. In the formula, $e^{\Delta\theta_j}$ denotes a delay phase of a $j^{th}$ path with respect to the first path.

The second data set may be a phase offset codebook S. S is composed of K constants, with any element s ranging from $-\pi$ to $\pi$. When the beam control is performed, a precoding $\Phi$ may be selected from C according to the terminal feedback information, and the phase offset s may be selected from S; then, the precoding finally used for beamforming is $\Phi'$, which is equal to $e^{js}\Phi$, that is, the codebook finally used for the beam control may be generated by a combination of elements in C and elements in S.

In an exemplary implementation, the beam control codebook may be composed of one data set, that is, a beam control codebook C*, and C* = S*C. S and C may be the precoding codebook C and the phase offset codebook S in the preceding embodiments respectively. The codebook C* may be produced by multiplying the precoding codebook C with the phase offset codebook S. Each precoding vector (or matrix) $\Phi$ in the codebook C* has the same properties as the precoding vector or precoding matrix in the preceding embodiments and is equivalent to $\Phi'$ for beamforming in the preceding embodiment. Thus, at least two precodings $\Phi_1$ and $\Phi_2$ in C* satisfy that $\Phi_2 = e^{js}\Phi_1$. $s \in [-\pi, \pi]$.

Based on the preceding embodiments, no matter the beam control codebook including one data set or two data sets, the phase offset uses the phase offset codebook S. The phase offset codebook S is configured to modify the initial phase or the reaching phase in the process of beam control. The size of the phase offset codebook S directly affects the performance of the beam control. Different S sets may be configured according to different situations. Examples are as follows: 1) When the array is very large, for example, when the number of elements or the number of electromagnetic elements exceeds $10^4$, the truncation effect of the beam component is relatively small, and the modification of the phase offset to the original precoding does not result in a significant beam gain. In this case, S may be set to an empty set; 2) when the terminal distance is always very far, for example, when the terminal distance is greater than 100 m, the modification of the phase offset to the original precoding cannot bring a significant beam gain. In this case, S may still be set to an empty set; and 3) when the phase offset can bring a significant gain, the spacing among elements in S may be determined according to factors such as the real-time performance of beam control and limitations of feedback information. For example, when the real-time requirements and the limitations of feedback information are not strict, a denser spacing may be used, for example, 1 degree; while a larger spacing, for example, 5 degrees or 10 degrees, may be used when the requirements are higher.

In an exemplary implementation, beam control may be performed using the beam control codebook including one data set described in the preceding embodiments, which may include the following operations:

In operation 1, the first communication node sends channel measurement information to the second communication node.

In operation 2, the second communication node determines an optimal PMI according to the received information and feeds back the PMI to the first communication node.

In operation 3, the first communication node selects a corresponding precoding $\Phi$ from the codebook C according to the PMI fed back by the second communication node and uses the precoding $\Phi$ for the beam control.

In another exemplary implementation, beam control may be performed using the beam control codebook including two data sets described in the preceding embodiments, which may include the following operations:

In operation 1, the first communication node sends channel measurement information to the second communication node.

In operation 2, the second communication node determines an optimal PMI and an optimal precoding offset indicator (POI) according to the received information and feeds back the PMI and POI to the first communication node.

In operation 3, the first communication node extracts the PMI and POI information from the information fed back by the second communication node and selects a corresponding precoding $\Phi$ from the codebook C and a phase offset s.

In operation 4.1, if s is equal to 0, the beam control is performed directly using the selected precoding $\Phi$.

In operation 4.2, if s is not equal to 0, the optimal precoding $\Phi'$ is obtained according to the formula that $\Phi = e^{js}\Phi$ and then the beam control is performed.

In the preceding embodiments of the present application, the first communication node may be a transmitting base station or a reconfigurable intelligent surface, and the second communication node may be a mobile terminal device, an Internet of Things device, or a reconfigurable intelligent surface.

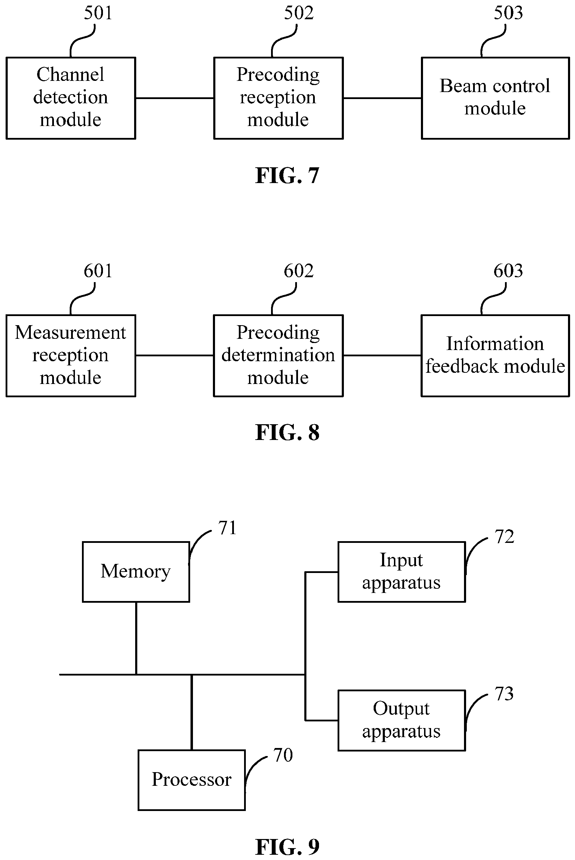

FIG. 7 is a diagram illustrating the structure of a beam control apparatus according to an embodiment of the present application. The apparatus may perform the beam control method provided by any embodiment of the present application and has the corresponding functional modules and beneficial effects for executing the method. The apparatus may be implemented by software and/or hardware and is generally integrated into a base station or a reconfigurable intelligent surface. The apparatus includes a channel detection module 501, a precoding reception module 502, and a beam control module 503.

The channel detection module 501 is configured to send channel measurement information to a second communication node.

The precoding reception module 502 is configured to receive an optimal precoding matrix indicator (PMI) fed back by the second communication node according to the channel measurement information.

The beam control module 503 is configured to select a corresponding precoding from a codebook according to the optimal PMI to perform beam control. The codebook includes the precoding and a phase offset.

In this embodiment of the present application, the channel measurement information is sent to a second communication node via the channel detection module; the precoding reception module acquires the optimal precoding fed back by the second communication node according to the channel measurement information; and the beam control module selects the precoding from the codebook including the precoding and the phase offset according to the optimal precoding for performing the beam control. Thus, the receiving gain can be improved, and the signal quality between communication nodes can be enhanced.

Further, based on the preceding embodiments of the present application, the apparatus also includes an offset information module.

The offset information module is configured to receive an optimal precoding offset indicator (POI) fed back by the second communication node.

Further, based on the preceding embodiments of the present application, the beam control module 503 includes a codebook extraction unit, an offset determination unit, and a control execution unit.

The codebook extraction unit is configured to extract the optimal PMI and search for the precoding corresponding to the optimal PMI in the codebook.

The offset determination unit is configured to determine a feedback result of the optimal POI of the second communication node.

The control execution unit is configured to perform the beam control using the precoding according to the feedback result.

Further, based on the preceding embodiments of the present application, the control execution unit is configured to determine that the optimal POI in the feedback result is a first preset value and perform the beam control using the precoding; and the control execution unit is configured to determine that the optimal POI in the feedback result is a phase offset indicator, select the phase offset corresponding to the optimal POI in the codebook, and perform the beam control using the precoding adjusted by the phase offset.

Further, based on the preceding embodiments of the present application, the apparatus also includes a precoding adjustment unit.

The precoding adjustment unit is configured to adjust the precoding using the phase offset according to a preset formula. The preset formula includes the following:

$$\mathbf{\Phi}' = e^{js}\mathbf{\Phi}.$$

$\Phi'$ denotes the adjusted precoding, $\Phi$ denotes the precoding, s denotes the phase offset, and j is an imaginary unit.

Further, based on the preceding embodiments of the present application, the codebook in the apparatus includes a precoding data set and a phase offset data set. The precoding data set stores the precoding. The phase offset data set stores the phase offset.

Further, based on the preceding embodiments of the present application, the precoding data set in the apparatus includes N precoding vectors or N precoding matrices, each precoding vector corresponds to a spatial beam, or each precoding matrix corresponds to a spatial beam group. N is a positive integer.

Further, based on the preceding embodiments of the present application, the precoding data set includes N precoding vectors or N precoding matrices, the number of elements in a precoding vector is the same as the number of antenna elements used by an array antenna of the first communication node in a process of beam control, and a precoding matrix includes at least two precoding vectors. N is a positive integer.

Further, based on the preceding embodiments of the present application, the precoding vector $\Phi$ is equal to $[e^{j\theta_1}, e^{j\theta_2} ... e^{j\theta_i} ... e^{j\theta_n}]$. j denotes an imaginary unit. i denotes an element sequence number. $\theta_i$ denotes the amount of a phase change on an $i^{th}$ element, n denotes the number of antenna elements used in a process of beam control. The precoding matrix is composed of R precoding vectors. R is greater than or equal to 2.

Further, based on the preceding embodiments of the present application, the phase offset data set includes K constants, and each constant has a value ranging from $-\pi$ to $\pi$.

Further, based on the preceding embodiments of the present application, the codebook includes an offset precoding data set generated according to the precoding and the phase offset.

Further, based on the preceding embodiments of the present application, the offset precoding data set includes M precoding vectors or M precoding matrices, and at least two precodings $\Phi_1$ and $\Phi_2$ in the M precoding vectors or in the M precoding matrices satisfy that $\Phi_2 = e^{js}\Phi_1$. $s \in [-\pi, \pi]$, j denotes an imaginary unit, M is greater than N, and N is the number of independent precodings. "Independent" represents that two precoding vectors or two precoding matrices do not satisfy that $\Phi_2 = e^{js}\Phi_1$.

Further, based on the preceding embodiments of the present application, the apparatus also includes an offset value module. The offset value module is configured to determine a value of the phase offset in the codebook according to a terminal distance and an antenna array size of the first communication node.

FIG. 8 is a diagram illustrating the structure of another beam control apparatus according to an embodiment of the present application. The apparatus may perform the beam control method provided by any embodiment of the present application and has the corresponding functional modules and beneficial effects for executing the method. The apparatus may be implemented by software and/or hardware and is generally integrated into a mobile terminal device, an Internet of Things device, or a reconfigurable intelligent surface. The apparatus includes a measurement reception module 601, a precoding determination module 602, and an information feedback module 603.

The measurement reception module 601 is configured to receive channel measurement information sent by a first communication node.

The precoding determination module 602 is configured to determine an optimal precoding matrix indicator (PMI) according to the channel measurement information.

The information feedback module 603 is configured to feed back the optimal PMI to the first communication node so that the first communication node selects a corresponding precoding from a codebook for performing beam control. The codebook includes the precoding and a phase offset.

In this embodiment of the present application, the channel measurement information sent by a first communication node is received via the measurement reception module; the precoding determination module determines the optimal precoding (PMI) according to the channel measurement information; and the information feedback module feeds back the optimal precoding (PMI) to the first communication node so that the first communication node selects the precoding in the codebook including the offset and the precoding according to the optimal precoding (PMI) for performing beam control. Thus, the accurate beam control is achieved, the signal reception gain is improved, and the signal quality between communication nodes is enhanced.

Further, based on the preceding embodiments of the present application, the apparatus also includes an offset determination module.

The offset determination module is configured to determine to feed back an optimal precoding offset indicator (POI) according to the channel measurement information and a threshold determination condition.

Further, based on the preceding embodiments of the present application, the codebook in the apparatus includes a precoding data set and a phase offset data set. The precoding data set stores the precoding. The phase offset data set stores the phase offset.

Further, based on the preceding embodiments of the present application, the precoding data set in the apparatus includes N precoding vectors or N precoding matrices, each precoding vector corresponds to a spatial beam, or each precoding matrix corresponds to a spatial beam group. N is a positive integer.

Further, based on the preceding embodiments of the present application, the precoding data set includes N precoding vectors or N precoding matrices, the number of elements in a precoding vector is the same as the number of antenna elements used by an array antenna of the first communication node in a process of beam control, and a precoding matrix includes at least two precoding vectors. N is a positive integer.

Further, based on the preceding embodiments of the present application, the precoding vector $\Phi$ is equal to $[e^{j\theta_1}, e^{j\theta_2} ... e^{j\theta_i} ... e^{j\theta_n}]$. j denotes an imaginary unit. i denotes an element sequence number. $\theta_i$ denotes the amount of a phase change on an $i^{th}$ element, n denotes the number of antenna elements used in a process of beam control. The precoding matrix is composed of R precoding vectors. R is greater than or equal to 2.

Further, based on the preceding embodiments of the present application, the phase offset data set includes K constants, and each constant has a value ranging from $-\pi$ to $\pi$.

Further, based on the preceding embodiments of the present application, the codebook includes an offset precoding data set generated according to the precoding and the phase offset.

Further, based on the preceding embodiments of the present application, the offset precoding data set includes M precoding vectors or M precoding matrices; and at least two precodings $\Phi_1$ and $\Phi_2$ in the M precoding vectors or in the M precoding matrices satisfy that $\Phi_2 = e^{js}\Phi_1$. where M is greater than N, N is the number of precodings $\Phi_1$, $s \in [-\pi, \pi]$, and j denotes an imaginary unit.

Further, based on the preceding embodiments of the present application, the apparatus also includes an offset value module. The offset value module is configured to determine a value of the phase offset in the codebook according to a terminal distance and an antenna array size of the first communication node.

FIG. 9 is a diagram illustrating the structure of an electronic device according to an embodiment of the present application. The electronic device includes a processor 70, a memory 71, an input apparatus 72, and an output apparatus 73. One or more processors 70 may be provided in the electronic device. One processor 70 is used as an example in FIG. 9. The processor 70, the memory 71, the input apparatus 72, and the output apparatus 73 in the electronic device may be connected through a bus or in other manners. In FIG. 9, a connection through a bus is used as an example.

As a computer-readable storage medium, the memory 71 may be configured to store software programs, computer-executable programs, and modules, such as modules (the channel detection module 501, the precoding reception module 502, and the beam control module 503, or the measurement reception module 601, the precoding determination module 602, and the information feedback module 603) corresponding to the beam control apparatus in this embodiment of the present application. The processor 70 executes software programs, instructions, and modules stored in the memory 71 to perform function applications and data processing of the electronic device, that is, to implement the preceding beam control method.

The memory 71 may mainly include a program storage region and a data storage region. The program storage region may store an operating system and an application program required by at least one function. The data storage region may store data created based on the use of the electronic device. In addition, the memory 71 may include a high-speed random-access memory and a nonvolatile memory, such as at least one disk memory, a flash memory, or other nonvolatile solid-state memories. In some examples, the memory 71 may further include memories remotely disposed with respect to the processor 70. These remote memories may be connected to the electronic device via a network. Examples of the preceding network include but are not limited to, the Internet, an intranet, a local area network, a mobile communication network, and a combination thereof.

The input apparatus 72 may be configured to receive inputted digital or character information and generate key signal input related to user settings and function control of the electronic device. The output apparatus 73 may include a display screen and other display devices.

An embodiment of the present application also provides a storage medium including computer-executable instructions, and the computer-executable instructions are configured to perform an array beam control method when executed by a computer processor. The method includes the following operations:

Channel measurement information is sent to a second communication node.

An optimal precoding matrix indicator (PMI) fed back by the second communication node according to the channel measurement information is received.

A corresponding precoding is selected from a codebook according to the optimal precoding matrix indicator (PMI) for performing beam control. The codebook includes the precoding and a phase offset.

Alternatively, the method includes the following operations:

Channel measurement information sent by a first communication node is received.

An optimal precoding matrix indicator (PMI) is determined according to the channel measurement information.

The optimal PMI is fed back to the first communication node so that the first communication node selects a corresponding precoding from a codebook for performing beam control. The codebook includes the precoding and a phase offset.

From the preceding description of the embodiments, it is apparent to those skilled in the art that the present application may be implemented by the use of software and necessary general-purpose hardware or may be implemented by hardware, but in many cases, the former is implemented. Based on this understanding, the technical schemes of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules involved in the embodiments of the preceding apparatus are just divided according to functional logic, and the division is not limited to this, as long as the corresponding functions can be achieved. Additionally, the specific names of functional units are just intended for distinguishing and are not to limit the scope of the present application.

It is to be understood by those of ordinary skill in the art that some or all operations of the preceding methods and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or operation may be performed jointly by several physical components. Some or all physical components may be implemented as software executed by a processor, such as a central processing unit, a digital signal processor, or a microprocessor, may be implemented as hardware, or may be implemented as integrated circuits, such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules, or other data). The computer storage media include but are not limited to, a RAM, a ROM, an electrically erasable programmable read-only memory (EEPROM), a flash memory, or other memory technologies, a compact disc read-only memory (CD-ROM), a digital video disc (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in a modulated data signal such as a carrier wave or other transport mechanism and may include any information delivery medium.

**Claims**

1. A beam control method, being applied to a first communication node and comprising:

   sending channel measurement information to a second communication node;
   receiving an optimal precoding matrix indicator, PMI, fed back by the second communication node according to the channel measurement information; and
   selecting, from a codebook, a corresponding precoding according to the optimal PMI to perform beam control, wherein the codebook comprises the precoding and a phase offset.

2. The method of claim 1, further comprising:
   receiving an optimal precoding offset indicator, POI, fed back by the second communication node.

3. The method of claim 1, wherein selecting, from the codebook, the corresponding precoding according to the optimal PMI to perform the beam control comprises:

extracting the optimal PMI, and searching for the precoding corresponding to the optimal PMI in the codebook;
determining a feedback result of an optimal POI of the second communication node; and
performing the beam control using the precoding according to the feedback result.

4. The method of claim 3, wherein performing the beam control using the precoding according to the feedback result comprises:

determining that the optimal POI in the feedback result is a first preset value, and performing the beam control using the precoding; or
determining that the optimal POI in the feedback result is a phase offset indicator, selecting a phase offset corresponding to the optimal POI in the codebook, and performing the beam control using the precoding adjusted by the phase offset.

5. The method of claim 4, further comprising:
adjusting the precoding using the phase offset according to a preset formula, wherein the preset formula comprises:

$$\boldsymbol{\Phi}' = e^{js}\boldsymbol{\Phi};$$

wherein $\boldsymbol{\Phi}'$ denotes the adjusted precoding, $\boldsymbol{\Phi}$ denotes the precoding, s denotes the phase offset, and j is an imaginary unit.

6. The method of claim 1, wherein the codebook comprises a precoding data set and a phase offset data set, wherein the precoding data set stores the precoding, and the phase offset data set stores the phase offset.

7. The method of claim 6, wherein the precoding data set comprises N precoding vectors or N precoding matrices, each precoding vector of the N precoding vectors corresponds to a spatial beam, or each precoding matrix of the N precoding matrices corresponds to a spatial beam group, wherein N is a positive integer.

8. The method of claim 6, wherein the precoding data set comprises N precoding vectors or N precoding matrices, a number of elements in a precoding vector of the N precoding vectors is the same as a number of antenna elements used by an array antenna of the first communication node in a process of the beam control, and a precoding matrix of the N precoding matrices comprises at least two precoding vectors of the N precoding vectors, wherein N is a positive integer.

9. The method of claim 7 or 8, wherein a precoding vector $\Phi$ of the N precoding vectors is equal to $[e^{j\theta_1}, e^{j\theta_2} ... e^{j\theta_i} ... e^{j\theta_n}]$, wherein j denotes an imaginary unit, i denotes an element sequence number, $\theta_i$ denotes an amount of a phase change on an $i^{th}$ element, and n denotes a number of antenna elements used in a process of the beam control; and a precoding matrix of the N precoding matrices is composed of R precoding vectors of the N precoding vectors, wherein R is greater than or equal to 2.

10. The method of claim 6, wherein the phase offset data set comprises K constants, and each of the K constants has a value ranging from $-\pi$ to $\pi$.

11. The method of claim 1, wherein the codebook comprises an offset precoding data set generated according to the precoding and the phase offset.

12. The method of claim 11, wherein the offset precoding data set comprises M precoding vectors or M precoding matrices, and at least two precodings $\Phi_1$ and $\Phi_2$ in the M precoding vectors or in the M precoding matrices satisfy that $\Phi_2 = e^{js}\Phi_1$, wherein $s \in [-\pi, \pi]$, j denotes an imaginary unit, M is greater than N, and N is a number of independent precodings, wherein two precoding vectors or two precoding matrices being independent represents that the two precoding vectors or the two precoding matrices do not satisfy that $\Phi_2 = e^{js}\Phi_1$.

13. The method of claim 1, further comprising: determining a value of the phase offset in the codebook according to a terminal distance and an antenna array size of the first communication node.

**14.** A beam control method, being applied to a second communication node and comprising:

receiving channel measurement information sent by a first communication node;
determining an optimal precoding matrix indicator, PMI, according to the channel measurement information; and
feeding the optimal PMI back to the first communication node to enable the first communication node to select a corresponding precoding from a codebook according to the optimal PMI for performing beam control, wherein the codebook comprises the precoding and a phase offset.

**15.** The method of claim 14, further comprising:
determining to feed back an optimal precoding offset indicator, POI, according to the channel measurement information and a threshold determination condition.

**16.** The method of claim 14, wherein the codebook comprises a precoding data set and a phase offset data set, wherein the precoding data set stores the precoding, and the phase offset data set stores the phase offset.

**17.** The method of claim 16, wherein the precoding data set comprises N precoding vectors or N precoding matrices, each precoding vector of the N precoding vectors corresponds to a spatial beam, or each precoding matrix of the N precoding matrices corresponds to a spatial beam group, wherein N is a positive integer.

**18.** The method of claim 16, wherein the precoding data set comprises N precoding vectors or N precoding matrices, a number of elements in a precoding vector of the N precoding vectors is the same as a number of antenna elements used by an array antenna of the first communication node in a process of the beam control, and a precoding matrix of the N precoding matrices comprises at least two precoding vectors of the N precoding vectors.

**19.** The method of claim 17 or 18, wherein a precoding vector $\Phi$ of the N precoding vectors is equal to $[e^{j\theta_1}, e^{j\theta_2} ... e^{j\theta_i} ... e^{j\theta_n}]$, wherein j denotes an imaginary unit, i denotes an element sequence number, $\theta_i$ denotes an amount of a phase change on an $i^{th}$ element, and n denotes a number of antenna elements used in a process of the beam control; and a precoding matrix of the N precoding matrices is composed of R precoding vectors of the N precoding vectors, wherein R is greater than or equal to 2.

**20.** The method of claim 16, wherein the phase offset data set comprises K constants, and each of the K constants has a value ranging from $-\pi$ to $\pi$.

**21.** The method of claim 14, wherein the codebook comprises an offset precoding data set generated according to the precoding and the phase offset.

**22.** The method of claim 21, wherein the offset precoding data set comprises M precoding vectors or M precoding matrices, wherein M is greater than N, and at least two precodings $\Phi_1$ and $\Phi_2$ in the M precoding vectors or in the M precoding matrices satisfy that $\Phi_2 = e^{js}\Phi_1$, wherein s E $[-\pi, \pi]$, j denotes an imaginary unit, N is a number of independent precoding vectors or independent matrices, and two precoding vectors or two precoding matrices being independent represents that the two precoding vectors or the two precoding matrices do not satisfy that $\Phi_2 = e^{is}\Phi_1$.

**23.** An electronic device, comprising:

at least one processor; and
a storage apparatus configured to store at least one program;
wherein the at least one program, when executed by the at least one processor, causes the at least one processor to perform the beam control method of any one of claims 1 to 22.

**24.** A computer-readable storage medium storing at least one program, wherein the at least one program, when executed by at least one processor, performs the beam control method of any one of claims 1 to 22.

FIG. 1

Send channel measurement information to a second communication node ⌒110

Receive an optimal precoding matrix indicator (PMI) and an optimal precoding offset indicator (POI) fed back by the second communication node according to the channel measurement information ⌒120

Extract the optimal PMI and search for a precoding corresponding to the optimal PMI in a codebook ⌒130

Extract the optimal POI and search for a phase offset corresponding to the POI in the codebook ⌒140

Perform beam control according to the extracted precoding and offset ⌒150

FIG. 2

Send channel measurement information to a second communication node $\sim$210

Receive an optimal precoding matrix indicator (PMI) fed back by the second communication node according to the channel measurement information $\sim$220

Extract the optimal PMI and search for a precoding corresponding to the optimal PMI in a codebook $\sim$230

Receive an optimal precoding offset indicator (POI) fed back by the second communication node $\sim$240

Determine that the optimal POI in the feedback result is a first preset value, and perform beam control using the precoding $\sim$250

Determine that the optimal POI in the feedback result is a phase offset indicator, select a phase offset corresponding to the optimal POI in the codebook, and perform beam control using the precoding adjusted by the phase offset $\sim$260

**FIG. 3**

Send channel measurement information to a second communication node $\sim$310

Receive an optimal precoding matrix indicator (PMI) fed back by the second communication node according to the channel measurement information $\sim$320

Select a corresponding precoding from a codebook according to the optimal PMI for beam control; where the codebook includes the precoding and a phase offset $\sim$330

**FIG. 4**

Receive channel measurement information sent by a first communication node ~410

Determine an optimal precoding matrix indicator (PMI) according to the channel measurement information ~420

Determine to feed back an optimal precoding offset indicator (POI) according to the channel measurement information and a threshold determination condition ~430

Feed back the optimal PMI to the first communication node so that the first communication node selects a corresponding precoding from a codebook for beam control; where the codebook includes precoding and phase offset ~440

**FIG. 5**

Receive channel measurement information sent by a first communication node ~510

Determine an optimal precoding matrix indicator (PMI) according to the channel measurement information ~520

Feed back the optimal PMI to the first communication node so that the first communication node selects a corresponding precoding from a codebook for beam control; where the codebook includes precoding and phase offset ~530

**FIG. 6**

501

Channel
detection
module

502

Precoding
reception
module

503

Beam control
module

**FIG. 7**

601

Measurement
reception
module

602

Precoding
determination
module

603

Information
feedback module

**FIG. 8**

71

Memory

72

Input
apparatus

73

Output
apparatus

70

Processor

**FIG. 9**

## INTERNATIONAL SEARCH REPORT

| | International application No. |
| --- | --- |
| | **PCT/CN2022/131635** |

### A. CLASSIFICATION OF SUBJECT MATTER

H04B 7/0456(2017.01)i; H04B 7/02(2018.01)i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; ENTXTC; CJFD; 3GPP: 预编码, 码本, 调相, 相移, 相位调控, 相位偏移, 相位调整, 接收增益, 索引, 波束成形, 波束成型, 波束赋形, 波束调整, 波束调控, POI, PMI, precoding, codebook, phase offset, phase regulat+, regulat+ phase, phase adjust+, phase modify+, beamforming, beam regulat+, index, receiving gain

### C. DOCUMENTS CONSIDERED TO BE RELEVANT

| Category* | Citation of document, with indication, where appropriate, of the relevant passages | Relevant to claim No. |
| --- | --- | --- |
| X | US 2011064156 A1 (LG ELECTRONICS INC.) 17 March 2011 (2011-03-17) description, paragraphs 107-110, 121-126, 131-137, 144-152, 162-174 and 234-250 | 1-24 |
| X | US 2013208704 A1 (HULTELL JOHAN et al.) 15 August 2013 (2013-08-15) description, paragraphs 82-103, and figures 5-9 | 1-24 |
| X | US 2018234148 A1 (ALCATEL LUCENT) 16 August 2018 (2018-08-16) description, paragraphs 31-54, and description, figures 1 and 2 | 1-24 |
| A | US 2013039401 A1 (SAMSUNG ELECTRONICS CO., LTD. et al.) 14 February 2013 (2013-02-14) entire description | 1-24 |
| A | US 2021218456 A1 (CHINA ACADEMY OF TELECOMMUNICATIONS TECHNOLOGY) 15 July 2021 (2021-07-15) entire description | 1-24 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 January 2023** | **20 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/131635**

| Patent document cited in search report | | | Publication date (day/month/year) | Patent family member(s) | | | Publication date (day/month/year) |
|---|---|---|---|---|---|---|---|
| US | 2011064156 | A1 | 17 March 2011 | EP | 2067276 | A2 | 10 June 2009 |
| | | | | KR | 20080022033 | A | 10 March 2008 |
| | | | | WO | 2008030035 | A2 | 13 March 2008 |
| US | 2013208704 | A1 | 15 August 2013 | US | 2016073272 | A1 | 10 March 2016 |
| | | | | WO | 2012026868 | A1 | 01 March 2012 |
| | | | | EP | 2609691 | A1 | 03 July 2013 |
| US | 2018234148 | A1 | 16 August 2018 | WO | 2017025794 | A1 | 16 February 2017 |
| | | | | EP | 3332488 | A1 | 13 June 2018 |
| | | | | CN | 106452538 | A | 22 February 2017 |
| | | | | TW | 201709683 | A | 01 March 2017 |
| US | 2013039401 | A1 | 14 February 2013 | EP | 2742661 | A2 | 18 June 2014 |
| | | | | WO | 2013022321 | A2 | 14 February 2013 |
| | | | | KR | 20130017567 | A | 20 February 2013 |
| | | | | JP | 2014527754 | A | 16 October 2014 |
| | | | | CN | 103748850 | A | 23 April 2014 |
| US | 2021218456 | A1 | 15 July 2021 | WO | 2017152749 | A1 | 14 September 2017 |
| | | | | EP | 3657711 | A1 | 27 May 2020 |
| | | | | TW | 201733285 | A | 16 September 2017 |
| | | | | CN | 107181513 | A | 19 September 2017 |
| | | | | EP | 3429105 | A1 | 16 January 2019 |
| | | | | JP | 2019509686 | A | 04 April 2019 |
| | | | | KR | 20180122671 | A | 13 November 2018 |

Form PCT/ISA/210 (patent family annex) (January 2015)